# EUROPÄISCHE PATENTANMELDUNG

(11) **EP 1 892 411 A2**
(43) Veröffentlichungstag der Anmeldung: **27.02.2008**
(21) Anmeldenummer: 07015485.1
(22) Anmeldetag: 07.08.2007
(51) Int. Cl.: F02P 23/04

(54) **Einrichtung zur Verteilung von Laserlicht**

(30) Priorität: 09.08.2006 AT 13352006
(71) Anmelder: GE Jenbacher GmbH & Co. OHG, 6200 Jenbach (AT)
(72) Erfinder: Iskra, Kurt, 8062 Kumberg (AT); Klausner, Johann, 6391 St. Jakob (AT)
(74) Vertreter: Torggler, Paul Norbert

(57) **Zusammenfassung**

Einrichtung zur Verteilung von Laserlicht aus einer Lichtquelle (3) und/oder einem Eintrittslichtwellenleiter (1) auf mindestens zwei, insbesondere mehrere, Austrittslichtwellenleiter (2), wobei die Einrichtung mindestens ein im Betrieb der Einrichtung, vorzugsweise kontinuierlich, rotierendes Lichtablenkelement (4) aufweist, welches dazu vorgesehen ist, Laserlicht aus dem Eintrittslichtwellenleiter (1) und/oder der Lichtquelle (3) in Richtung der Austrittslichtwellenleiter (2) abzulenken.

## Beschreibung

Die vorliegende Erfindung betrifft eine Einrichtung zur Verteilung von Laserlicht aus einer Lichtquelle und/oder einem Eintrittslichtwellenleiter auf mindestens zwei, insbesondere mehrere, Austrittslichtwellenleiter. Darüber hinaus betrifft die Erfindung eine Laserzündvorrichtung und eine Brennkraftmaschine, insbesondere einen Gasmotor, mit einer solchen Einrichtung.

Herkömmliche diodengepumpte Festkörperlaser, welche zum Beispiel im Bereich der Laserzündung von Brennkraftmaschinen eingesetzt werden, beziehen Ihre Pumpenergie meist aus Laserdioden, welche entweder an das Lasermedium direkt angekoppelt werden oder über eine optische Faser mit dem Lasermedium in Verbindung stehen.

Es existieren verschiedene Konzepte zur Verteilung von fasergeführter Laserstrahlung von einer Quelle zu mehreren Abnehmern. Im Bereich der Telekommunikation sind elektrooptisch modulierte Multiplexer und Demultiplexer im Einsatz, bei denen aber nur sehr geringe Leistungen - also im Prinzip nur Informationen - übertragen werden können. Weitere Konzepte beruhen auf Anordnungen, die eine Überlagerung von Faserenden durch mechanische Stellvorrichtungen herstellen, was eine hochpräzise Ausrichtung und Reproduziergenauigkeit erfordert und damit nachteilig ist.

Andere Konzepte schlagen Freistrahlkupplungen vor, die eine zusätzliche optische Aufweitung senderseitig und eine anschließende Kollimation empfängerseitig vorsehen, was aber ebenfalls die Gesamtkomplexität des Systems erhöht. Insbesondere für die Verwendung für Zündanlagen von Brennkraftmaschinen gibt es derzeit keine Konzepte, die einen kontinuierlichen Betrieb in einer den Erfordernissen der Brennkraftmaschine gerecht werdenden Geschwindigkeit gewährleisten könnten. Insbesondere sind die bisher unter dem Namen Multiplexer und Demultiplexer bekannten gattungsgemäßen Einrichtungen aber auch nicht dazu geeignet, über einen für Zündanlagen von Brennkraftmaschinen genügend langen Zeitraum Pumpstrahlung durch eine fasergekoppelte Anordnung zu transportieren.

Aufgabe der Erfindung ist es daher, eine insbesondere für den Einsatz für Laserzündvorrichtungen von Brennkraftmaschine geeignete gattungsgemäße Einrichtung zu schaffen.

Dies wird erreicht, indem die Einrichtung mindestens ein im Betrieb der Einrichtung, vorzugsweise kontinuierlich, rotierendes Lichtablenkelement aufweist, welches dazu vorgesehen ist, Laserlicht aus dem Eintrittslichtwellenleiter und/oder der Lichtquelle in Richtung der Austrittslichtwellenleiter abzulenken.
Durch die erfindungsgemäße Einrichtung ist es möglich, für die Zündung mehrerer Zylinder einer Brennkraftmaschine nur eine Pumplichtquelle zu verwenden. Diese versorgt über die erfindungsgemäße Einrichtung in zeitlicher Stafflung entsprechend der Zündreihenfolge nacheinander die Zylinder der Brennkraftmaschine mit Pumplaserstrahlung. Hieraus entsteht ein wesentlicher Kostenvorteil, da gegenüber den bisher bekannten Konzepten eine Vielzahl von Pumplichtquellen eingespart werden kann. Insbesondere für den Einsatz von Brennkraftmaschinen ist es dabei günstig, wenn die Einrichtung zur Übertragung von Laserlicht, vorzugsweise Pumplaserlicht, mit einer Leistung von mindestens 10 W (Watt), vorzugsweise von mindestens 100 W, vorzugsweise mit einem Wirkungsgrad von mindestens 80 %, geeignet ist und/oder wenn die Einrichtung im kontinuierlichen Betrieb zur Übertragung von Laserlicht, vorzugsweise Pumplaserlicht, auf jeweils einen Austrittslichtwellenleiter 2 während Zeitintervallen mit Intervalllängen zwischen 50 µs (Mikrosekunden) und 8000 µs, vorzugsweise zwischen 100 µs und 500 µs, geeignet ist. Der Wirkungsgrad bestimmt sich dabei aus dem Verhältnis der Gesamtpulsenergie des Pumppulses an der Lichteintrittsfläche des Austrittslichtwellenleiters zur Gesamtpulsenergie des Pumppulses an der Lichteintrittsfläche des Lichtablenkelementes. Grundsätzlich kann die erfindungsgemäße Einrichtung aber sowohl zur Übertragung von kontinuierlichem als auch von gepulstem Laserlicht eingesetzt werden.

Eine mechanisch besonders einfach realisierbare und damit äußerst stabile Variante der erfindungsgemäen Einrichtung kann geschaffen werden, wenn das Lichtablenkelement im Betrieb fortlaufend in eine Rotationsrichtung rotiert, wobei bevorzugt vorgesehen ist, dass das Lichtablenkelement das Laserlicht nacheinander in Richtung der verschiedenen Austrittslichtwellenleiter ablenkt. Besonders stabil arbeitende und wartungsarme Einrichtungen können geschaffen werden, wenn das Lichtablenkelement das einzige bewegbar gelagerte, optisch wirksame Bauteil der Einrichtung ist.

Unter den erfindungsgemäßen Einrichtungen gibt es insbesondere zwei Gruppen. Bei der einen ist vorgesehen, dass das Lichtablenkelement so ausgebildet ist, dass durch das Lichtablenkelement hindurch transmittiertes Laserlicht, vorzugsweise dessen Fokus, von dem Lichtablenkelement in seiner Ausbreitungsrichtung ablenkbar ist. Die andere sieht vor, dass das Lichtablenkelement so ausgebildet ist, dass das Laserlicht, vorzugsweise dessen Fokus, durch Reflektion am Lichtablenkelement in seiner Ausbreitungsrichtung ablenkbar ist.

Grundsätzlich lassen sich erfindungsgemäße Einrichtungen mit allen bekannten Arten von Eintrittslichtwellenleitern und/oder Austrittslichtwellenleitern realisieren, Bevorzugt sind aber Ausführungsbeispiele vorgesehen, bei denen der Eintrittslichtwellenleiter und/oder die Austrittslichtwellenleiter Lichtleitfasern sind.

Weitere Merkmale und Einzelheiten der vorliegenden Erfindung ergeben sich aus der nachfolgenden Figurenbeschreibung. Dabei dienen die:
- Fig. 1 bis 3: zur Beschreibung eines erfindungsgemäßen Ausführungsbeispiels, bei dem das Laserlicht durch das Lichtablenkelement hindurch tranmittiert wird,
- Fig. 4 und 5: zur Beschreibung von alternativen erfindungsgemäßen Ausgestaltungsformen des Ausführungsbeispiels gemäß der Fig. 1 bis 3 und
- Fig. 6: zur Erläuterung eines Ausführungsbeispiels, bei dem das Lichtablenkelement mit reflektierten Laserlichtstrahlen arbeitet.

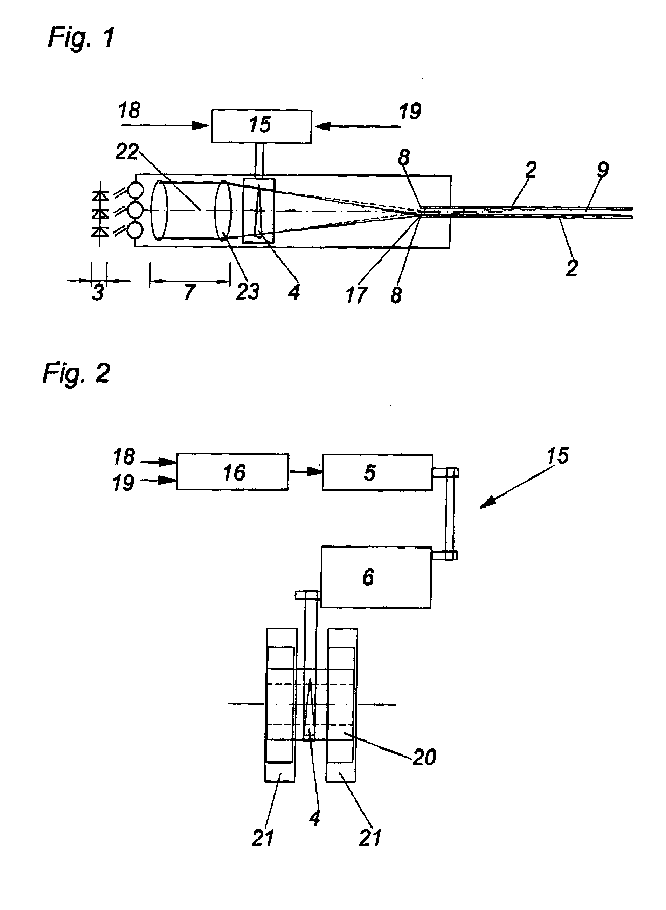

Mit allen gezeigten Ausführungsbeispielen wird jeweils eine erfindungsgemäße Einrichtung vorgeschlagen, die in einer kontinuierlich betriebenen Anordnung ohne großen zusätzlichen Aufwand die von einer Pumpdiode oder Pumpdiodenanordnung oder anders gearteten Lichtquelle im gepulsten Betrieb erzeugte Laserstrahlung auf mehrere Austrittslichtwellenleiter verteilt, welche die Laserstrahlung in weiterer Folge zu den zu pumpenden Laserresonatoren oder Laserverstärkern - vorzugsweise der Zylinder - transportieren kann. Die vorgeschlagenen Anordnungen gewährleisten eine ausreichend lange optische Überlagerung von Lichtquelle 3 bzw. Eintrittslichtwellenteiter 1 und den jeweiligen Austrittslichtwellenleitem 2 ohne den kontinuierlichen Bewegungsablauf zu unterbrechen. Beim Einsatz für Laserzündvorrichtungen für Brennkraftmaschinen ist dabei günstiger Weise vorgesehen, dass Synchronisationsvorrichtungen zur Synchronisation der Rotationsbewegung des Lichtablenkelementes 4 mit der Drehzahl und dem benötigten Zündwinkel der Brennkraftmaschine vorhanden sind. In der Einrichtung gemäß den Fig. 1 bis 3 ist hierfür der im Detail weiter unten anhand von Fig. 2 genauer erläuterte Antrieb 15 für das Lichtablenkelement 4 vorgesehen.

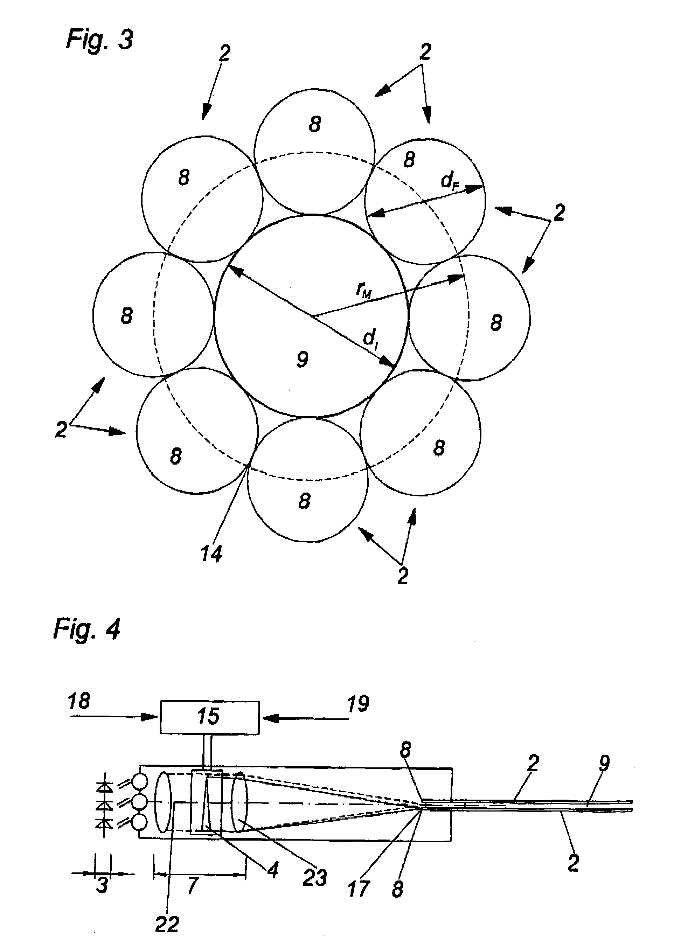

Wie insbesondere in Fig. 1 gezeigt, wird das von der in Form mehreren Laserdioden ausgebildeten Lichtquelle 3 erzeugte Laserlicht nach Kollimation und eventuell vorgenommener Umstapelung in eine Fokussieroptik 7 eingekoppelt. Diese dient der Generierung des Fokus 17 das Laserlichtes. Zur Verteilung des Laserlichtes auf mehrere - hier in Form von Lichtleitfasern ausgeführten Austrittslichtwellenleitern 2 - ist das rotierende Lichtablenkelement 4 vorgesehen, welches über den weiter unten genauer erläuterten Antrieb 15 in kontinuierliche Rotationsbewegung versetzt wird. Im gezeigten Ausführungsbeispiel ist das Lichtablenkelement 4 in Form eines schwach keilförmigen Prismas ausgeführt, welches synchron mit der Drehzahl der Brennkraftmaschine um die Fokussierachse 22 rotiert und dadurch eine geringe definierte Winkelablenkung des Fokus 17 des Laserlichts gegenüber der Fokussierachse 22 bewirkt. Von einem schwach keilförmigen Prisma kann dabei insbesondere ausgegangen werden, wenn zumindest zwei der Keilflächen des keilförmigen Prismas einen Winkel von maximal 10°, vorzugsweise von maximal 5°, miteinander einschließen. Die geringen Winkelabweichungen zwischen dem Fokus 17 und der Fokussierachse 22 liegen günstigerweise in einem Winkelbereich zwischen 0.5° und 5°, vorzugsweise in einem Winkelbereich zwischen 1° und 2°.Unter der Annahme einer Brennweite der Fokussieroptik 7 von 30 mm und eines Abstandes zwischen Prisma 4 und Strahleintrittsfläche 8 von 20 mm ergibt sich mit den Daten des Berechnungsbeispiels unten ein Ablenkwinkel des Strahls von 1.5° und ein Prismenwinkel von 3° bei Verwendung üblicher Glassorten mit Brechzahl 1,5. Durch Rotation des Prismas und die erzielte Winkelabweichung des Fokus 17 wird das mittels der Lichtquelle 3 erzeugte Laserlicht nacheinander auf die einzelnen Lichteintrittsflächen 8 der Austrittslichtwellenleiter 2 gelenkt. Die Lichteintrittsflächen 8 der Austrittslichtwellenleiter 2 sind in der bevorzugten und in Fig. 3 dargestellten Anordnung paarweise aneinander angrenzend auf einer geschlossenen Linie - hier in Form des Kreises 14 - angeordnet. Bevorzugt ist dabei die in Fig, 3 gezeigte rotationssymmetrische Anordnung. Diese ergibt sich, wenn die Austrittslichtwellenleiter 2 zumindest im Bereich der Einrichtung um ein gemeinsames Zentrum 9 gewunden sind. Grundsätzlich sind aber auch von dieser Rotationssymmetrie abweichende Anordnungen der Laserlichteintrittsflächen 8 der Austriftslichtwellenleiter 2 möglich. Um die kontinuierlich rotierende Bewegung der Lichtablenkeinrichtung 4 nicht unterbrechen zu müssen, sollten die Austrittslichtwellenleiter bzw. deren Lichteintrittsflächen 8 einen entsprechend großen Querschnitt d_{F} aufweisen, sodass eine ausreichend lange Überlagerung der Fläche des Fokus 17 des Laserlichtes mit der jeweiligen Lichteintrittsfläche 8 gewährleistet ist. Bei Bedarf kann hierzu das Coating der Lichtleitfasern entfernt werden.

Um eine möglichst dichte Anordnung der Laserlichteintrittsflächen 8 zu erreichen, sollte der Querschnitt des Zentrums 9 möglichst gering gehalten werden. Eine dichte Anordnung der Laserlichteintrittsflächen 8 trägt dazu bei, dass innerhalb der Pumpdauer, der die Lichtquelle 3 bildenden Laserdioden, die Fläche des Fokus 17 des Pumplaserlichts die Lichteintrittsfläche 8 des jeweiligen Lichtaustrittswellenleiters 2 ausreichend lange überlappt. In der Regel ist eine der Anzahl der Zylinder der Brennkraftmaschine entsprechende Anzahl von Austrittslichtwellenleitern 2 vorzusehen.

Es gelten folgende Berechnungsformeln:

| | | |
|---|---|---|
| Vorgabeparameter: | Faserdurchmesser: | d_{f} |
| | Drehzahl: | n |
| | Zylinderanzahl: | z |
| | Brennpunktdurchmesser: | d_{B} |
| Es ergibt sich daraus: | Sektorwinkel α = 360° / z | |
| Der Radius des Mittelpunktskreises: | r_{M} = d_{f} / (2 sin (α/2)) | |
| Der Durchmesser des Zentralteiles: | dᵢ = 2(r_{M}-d_{f}/2) | |
| Das Einkoppelintervall des Brennpunkts: | t_{E} = [(d_{f} - d_{B}) / (2r_{M}π)] / (n/60) | |

| | | |
|---|---|---|
| Anm.: letzter Termin: (n/60) bei Zweitaktbetrieb, (2n/60) bei Viertaktbetrieb und 2-facher Untersetzung des Prismenantriebs | | |

Dieses Einkoppelintervall soll länger sein als die Pumpdauer des Lasermediums. Dazu ist es notwendig, dass der Durchmesser des Brennpunktes d_{B} ausreichend klein gegenüber dem Durchmesser des Lichtleiters d_{f} ist.

Fig. 3 zeigt somit aufgrund seiner acht Austriftslichtwellenleiter 2 eine Ausführungsform eine Multiplexers für eine achtzylindrige Brennkraftmaschine. Im gezeigten Ausführungsbeispiel ist ein Faserdurchmesser d_{F} der Austrittslichtwellenleiter 2 von jeweils 600 µm vorgesehen. Somit resultiert ein minimaler Durchmesser d_{I} des Zentrums 9 von 968 µm. Bei einer Drehzahl von 6000 Umdrehungen pro Minute überstreicht ein Punkt auf dem Mittelpunktskreis 14 mit dem Radius r_{M} = 783 µm in der typischen Pumplebensdauer von 250 µs (Mikrosekunden) eine Strecke von 123 µm (Mikrometer) im Zweitaktbetrieb und von 61, 5 µm im Viertaktbetrieb. Dies bedeutet in diesem Ausführungsbeispiel, dass bei einem Durchmesser des Fokus 17 von 400 µm das Laserlicht noch mit ausreichenden Sicherheitsreserven ausreichend lang in die jeweiligen Austrittslichtweilenleiter 2 eingekoppelt werden kann.

Fig. 2 zeigt ein Ausführungsbeispiel wie der Antrieb 15 zur Erzeugung der Rotationsbewegung des Lichtablenkelementes ausgebildet sein kann. Wichtig für die Funktionsfähigkeit ist ein positionsgenauer Motor 5, der auf die Drehzahl und einen Drehwinkel der zu zündenden Brennkraftmaschine abgestimmt werden kann. Bevorzugt werden hierfür elektrische Motoren und insbesondere Synchronmotoren eingesetzt. Um eine möglichst kontinuierliche Bewegung des Lichtablenkelementes 4 sicherzustellen, ist ein Untersetzungsgetriebe 6 - ähnlich eines Uhrwerkes - vorgesehen. Dies überträgt die Drehbewegung im gezeigten Ausführungsbeispiel auf eine zylindrische Aufnahme 20, in der das Lichtablenkelement 4 bildende Prisma gehalten ist. Die zylindrische Aufnahme 20 wird in zwei Lagern 21 gehalten und zusammen mit dem Prisma rotiert. Der Motor 5 wird von einer Kontroll- und Steuerelektronik 16 angesteuert, welche die Drehzahl des Motors 5 in Abhängigkeit der Drehzahlvorgabe 18 der Brennkraftmaschine und der vorzugsweise aus einem Kennfeld abgegriffenen Zündwinkelvorgabe 19 bestimmt. Die Vorzüge der in Fig. 1 bis 3 gezeigten Anordnungen sind vor allem, dass der Strahlengang durch das schwach optisch ablenkende Lichtablenkelement 4 nur geringfügig abgelenkt aber ansonsten im Wesentlichen nicht verändert wird. Die Präzisionsanforderungen an die mechanischen Komponenten der gezeigten Einrichtung sind gering. Das einzige sich bewegende optische Teil ist das Ablenkprisma. Die Lichtquelle 3, die Fokussieroptik 7 und die Austrittstichtwellenleiter 2 werden nicht bewegt. Fehler in der Ausrichtung - wie Versatz oder Schlag - wirken sich wegen des kleinen notwendigen Öffnungswinkels nur geringfügig auf die resultierende Strahlablenkung aus. Der nötige Öffnungswinkel des Ablenkprismas ist beim Stand der Technik leicht mit der notwendigen Genauigkeit herstellbar. Die notwendige Präzision der Anordnung der Lichteintrittsflächen 8 der Austrittslichtwellenleiter 2 ist wegen des reproduzierbaren und genauen Durchmessers der Fasern und der statischen Anordnung mit geringem Aufwand einhaltbar.

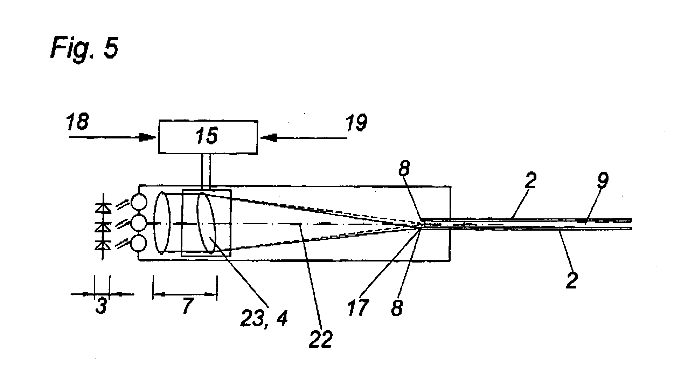

Die Fig. 4 und 5 zeigen zwei Alternativen zu dem bisher beschriebenen Ausführungsbeispiel. In Fig. 4 ist das rotierende Prisma als Lichtablenkelement 4 vor der Fokussierlinse 23 der Fokussieroptik 7 angebracht. Diese Variante kann gewählt werden, wenn der Platz zwischen Fokussierlinse 23 und Austrittslichtwellenleiter 2 gering ist.

Das Lichtablenkelement 4 kann - wie in Fig. 5 gezeigt - auch durch eine geeignete Verkippung der Fokussierlinse 23 realisiert werden. In diesem Fall wird also die verkippte Fokussierlinse 23 als Lichtablenkelement 4 rotiert.

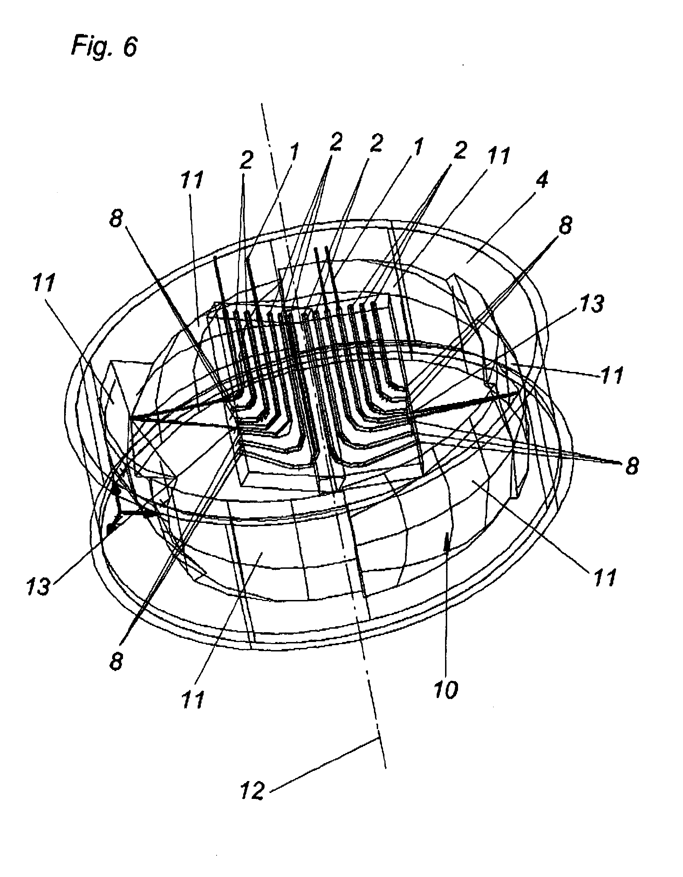

Fig. 6 zeigt - wie bereits eingangs erläutert - im Gegensatz zu den Ausführungsbeispielen gemäß der Fig. 1 bis 5 eine erfindungsgemäße Einrichtung, bei der das Licht am rotierenden Lichtablenkelement 4 durch Reflektion in seiner Ausbreitungsrichtung abgelenkt wird. Bei dieser Gruppe von Ausführungsbeispielen ist bevorzugt vorgesehen, dass das Lichtablenkelement 4 im Wesentlichen ringförmig und/oder scheibenförmig ausgebildet ist, und an seiner Innenfläche bzw. Oberfläche eine Reflektionsoberfläche 10 aufweist. Bei den mechanisch besonders gut beherrschbaren, fortlaufend in eine Rotationsrichtung rotierenden Ausführungsformen ist es dabei bevorzugt, wenn die Reflektionsoberfläche 10 sich in zumindest einer Raumrichtung über einen Winkelbereich von 360° erstreckt. Sowohl bei ringförmig als auch bei scheibenförmig ausgebildeten Lichtablenkelementen 4 ist es günstig, wenn die Reflektionsoberfläche 10 eine Abfolge von gegeneinander verkippten, vorzugsweise unmittelbar aneinander angrenzenden, gekrümmten Oberflächensegmenten, vorzugsweise Kugeloberflächensegmenten 11, aufweist. Die gekrümmten Oberflächensegmente der Reflektionsoberfläche 10 sind dabei üblicherweise als Spiegel mit unterschiedlicher Neigung ausgeführt. Die Schnelligkeit des Umschaltvorgangs hängt von dem Umfang der/des das Lichtablenkelement 4 bildenden Scheibe oder Ringes - wie von der Umdrehungsgeschwindigkeit und dem Laserstrahldurchmesser - ab.

Beim Ausführungsbeispiel gemäß Fig. 6 ist das Lichtablenkelement 4 ringförmig ausgebildet. Es rotiert um die Rotationsachse 12. Die Eintrittslichtwellenleiter 1 und Austrittslichtwellenleiter 2 sowie die zugeordneten Laserlichtaustrittsflächen 13 und Laserlichteintrittsflächen 8 sind in diesem Ausführungsbeispiel ortsfest mittig innerhalb des ringförmig ausgebildeten Lichtablenkelementes 4 angeordnet. In der gezeigten Ausführungsform sind zwei Eintrittslichtwellenleiter 1 vorhanden, deren Laserlicht jeweils auf mehrere Austrittslichtwellenleiter 2 verteilt wird. Zur Verteilung des Laserlichts weist das ringförmige rotierende Lichtablenkelement 4 eine Reflektionsoberfläche 11 auf, die aus einer Abfolge von unterschiedlich geneigten Kugeloberflächensegmenten 11 gebildet ist. Die Kugeloberflächensegmente 11 haben jeweils denselben Kugelradius und grenzen unmittelbar aneinander an. Die reflektierenden Oberflächen sind jeweils als Spiegel ausgeführt. Die die Kugetoberftächensegmente 11 bildenden Spiegel sind jeweils in der Art gekrümmt, dass das Zentrum der Krümmung das Rotationszentrum des Ringes ist. Dies wird erreicht, indem die Mittelpunkte von zumindest zwei, vorzugsweise von allen, Kugeloberflächensegmenten 11 auf der Rotationsachse 12 des ringförmigen Lichtablenkelementes 4 liegen. Hierdurch wird gewährleistet, dass der Laserstrahl beim Durchlauf eines Sektors bzw. Kugeloberflächensegmentes 11 konstant in einen der Austrittslichtwellenieiter 2 eingekoppelt wird. Die Krümmung der Spiegel bzw. Kugeloberflächensegmente 11 ist so gewählt, dass die Fokussierung des Laserstrahls bei jedem Spiegel gleich ist und der Laserstrahl dadurch nicht verzerrt wird. Um den nötigen Kippwinkel zwischen den einzelnen Kugeloberflächensegmenten 11 zu erreichen, liegen die Mittelpunkte von jeweils zwei benachbarten Kugeloberflächensegmenten 11 in Richtung der Rotationsachse 12 des ringförmigen Lichtablenkelementes 4 gegeneinander versetzt. Sie sind also in ihrer vertikalen Höhe gegeneinander verschoben. Die Winkelabweichung der Laserstrahlen sollte möglichst klein sein, damit der Strahl möglichst wenig verzerrt wird. Günstig ist es dabei, wenn der Betrag des Winkels zwischen einem aus der Lichtquelle 3 und/oder dem Eintrittslichtwellenleiter 1 austretenden Laserlichtstrahl und dem am Lichtablenkelement 4 reflektierten Laserlichtstrahl höchstens 45°, vorzugsweise höchstens 20°, beträgt, wobei negative wie auch positive Winkel möglich sind. Der Weg zwischen der Laserlichtaustrittsfläche 13 des Eintrittslichtwellenleiters 1 und dem Auftreffpunkt auf den Spiegel und dem Abstand zwischen diesem Auftreffpunkt und der Lichteintrittsfläche 8 des jeweiligen Austrittlichtwellenleiters 2 soll für jedes Kugeloberflächensegment 11 ungefähr gleich sein. Dieser Abstand sollte aufgrund der Fokussiereigenschaften der gekrümmten Kugeloberflächensegmente 11 ungefähr der Hälfte ihres Radius entsprechen. Je größer dieser Radius ist, desto kleiner muss der Kippwinkel bei gleichem Abstand der Strahleinkopplung sein. Leichte Verzerrungen, welche die Winkelabweichung verursacht, können durch eine asphärische Krümmung gegebenenfalls wieder ausgeglichen werden, falls die Konstruktion einen größeren Kippwinkel erfordert. Bei hoher Strahldivergenz kann in den Laseraustrittsflächen 13 des Eintrittsüchtwellenleiters 1 jeweils ein Kollimator angeordnet sein.

In der in Fig. 6 dargestellten Ausführungsvariante wird das Laserlicht von zwei Eintrittslichtwellenleitern 1 auf jeweils mehrere Austrittslichtwellenleiter 2 aufgeteilt. Dies ist besonders dann von Interesse, wenn Laserzündvorrichtungen für V-Motoren geschaffen werden sollen, da hier der Laserstrahl für jede Zylinderreihe phasenverschoben aufgeteilt werden muss, wofür ansonsten zwei Multiplexer von Nöten wären. Durch entsprechende Erhöhung der Anzahl von Eintrittslichtwellenleitern 1 und Austrittslichtwellenleitern 2 können auch mehr als zwei Multiplexer mittels einer erfindungsgemäßen Einrichtung ersetzt werden. Dabei ist es immer günstig, um die Reflektionswinkel klein zu halten, wenn wie in Fig. 6 dargestellt, der (die) Eintrittslichtwellenleiter 1 zentral zwischen den ihm (ihnen) zugeordneten Austrittslichtwellenleitern 2 angeordnet ist (sind). Die in Fig. 6 gezeigte Ausführungsvariante ermöglicht ein schnelles Umschalten. Die Distanz in der sich der Laserlichtstrahl in der Luft frei ausbreitet kann gering gehalten werden. Darüber hinaus bleibt auch die Distanz, in der sich der Laserstrahl in der Luft frei ausbreitet, über das ganze Kugeloberflächensegment 11 konstant. Zusätzlich tritt ein Fokussierungseffekt mit den kugelförmig gekrümmten Spiegeln 11 auf. Damit kann eine zusätzliche Fokussierlinse entfallen. Die Krümmung der Spiegel bzw. Kugeloberflächensegmente 11 kann so gewählt werden, dass ein astikmatischer Strahl ein symmetrisches Intensitätsprofil bekommt. Der Laserlichtstrahl wird beim Durchlauf durch ein Kugeioberflächensegment 11 jeweils stabil auf nur eine Lichteintrittsfläche 8 eines Austriftslichtwellenleiters gelenkt. Durch die Rotation des Lichtablenkelementes 4 tritt eine geringe Belastung der Reflektionsoberfläche 10 auf, da aufgrund der Rotation das Laserlicht immerzu auf eine andere Stelle der Reflektionsoberfläche 10 trifft. Der Antrieb zur Rotation des ringförmigen Lichtablenkelementes 4 gemäß Fig. 6 kann wie in Fig. 1 bis 5 ebenfalls über einen Motor und ein Untersetzergetriebe erfolgen. Letzteres kann zum Beispiel über eine Verzahnung von außen am Ring 4 angreifen. Die erfindungsgemäße Einrichtung kann als kompakte in sich geschlossene Baueinheit mit beim Stand der Technik bekannten Anschlüssen, insbesondere für die Austrittslichtwellenleiter und gegebenenfalls (den) die Fintrittslichtwellenleiter, ausgeführt sein.

## Patentansprüche

1. Einrichtung zur Verteilung von Laserlicht aus einer Lichtquelle und/oder einem Eintrittslichtwellenleiter auf mindestens zwei, insbesondere mehrere, Austrittslichtwellenleiter, **dadurch gekennzeichnet, dass** die Einrichtung mindestens ein im Betrieb der Einrichtung, vorzugsweise kontinuierlich, rotierendes Lichtablenkelement (4) aufweist, welches dazu vorgesehen ist, Laserlicht aus dem Eintrittslichiwellenleiter (1) und/oder der Lichtquelle (3) in Richtung der Austrittslichtwellenleiter (2) abzulenken.

2. Einrichtung nach Anspruch 1, **dadurch gekennzeichnet, dass** das Lichtablenkelement (4) im Betrieb fortlaufend in eine Rotationsrichtung rotiert.

3. Einrichtung nach Anspruch 1 oder 2, **dadurch gekennzeichnet, dass** das Lichtablenkelement (4) das Laserlicht nacheinander in Richtung der verschiedenen Austrittslichtwellenleiter (2) ablenkt.

4. Einrichtung nach einem der Ansprüche 1 bis 3, **dadurch gekennzeichnet, dass** das Lichtablenkelement (4) das einzige bewegbar gelagerte, optisch wirksame Bauteil der Einrichtung ist.

5. Einrichtung nach einem der Ansprüche 1 bis 4, **dadurch gekennzeichnet, dass** die Einrichtung zur Übertragung von Laserlicht, vorzugsweise Pumplaserlicht, mit einer Leistung von mindestens 10 W, vorzugsweise von mindestens 100 W, vorzugsweise mit einem Wirkungsgrad von mindestens 80 %, geeignet ist.

6. Einrichtung nach einem der Ansprüche 1 bis 5, **dadurch gekennzeichnet, dass** die Einrichtung in kontinuierlichen Betrieb zur Übertragung von Laserlicht, vorzugsweise Pumplaserlicht, auf jeweils einen der Austrittslichtwellenleiter (2) während Zeitintervallen mit Intervalllängen zwischen 50 µs und 8000 µs, vorzugsweise zwischen 100 µs und 500 µs, geeignet ist.

7. Einrichtung nach einem der Ansprüche 1 bis 6, **dadurch gekennzeichnet, dass** sie zur Übertragung von Laserlicht, insbesondere gepulstem Pumplaserlicht, für eine Laserzündvorrichtung für eine, insbesondere stationäre, Brennkraftmaschine geeignet ist.

8. Einrichtung nach einem der Ansprüche 1 bis 7, **dadurch gekennzeichnet, dass** der Eintrittslichtwellenleiter (1) und/oder die Austrittslichtwellenleiter (2) Lichtleitfasern sind.

9. Einrichtung nach einem der Ansprüche 1 bis 8, **dadurch gekennzeichnet, dass** sie eine Synchronisationsvorrichtung zur Synchronisation der Rotationsbewegung des Lichtablenkelementes (4) mit einer Drehzahl einer Brennkraftmaschine aufweist.

10. Einrichtung nach einem der Ansprüche 1 bis 9, **dadurch gekennzeichnet, dass** sie zum Rotieren des Lichtablenkelementes (4) einen positionsgenauen und auf die Drehzahl und den Drehwinkel einer Brennkraftmaschine abstimmbaren, vorzugsweise elektrischen, Motor, vorzugsweise Synchronmotor (5), aufweist.

11. Einrichtung nach einem der Ansprüche 1 bis 10, **dadurch gekennzeichnet, dass** sie zum Rotieren des Lichtablenkelementes (4) ein Untersetzungsgetriebe (6) aufweist.

12. Einrichtung nach einem der Ansprüche 1 bis 11, **dadurch gekennzeichnet, dass** sie für das aus der Lichtquelle (3) und/oder dem Eintrittslichtwellenleiter (1) austretende Licht eine Fokussieroptik (7), vorzugsweise eine Fokussierlinse, aufweist.

13. Einrichtung nach einem der Ansprüche 1 bis 12, **dadurch gekennzeichnet, dass** das Lichtablenkelement (4) so ausgebildet ist, dass durch das Lichtablenkelement (4) hindurch transmittiertes Laserlicht, vorzugsweise dessen Fokus, von dem Lichtablenkelement (4) in seiner Ausbreitungsrichtung ablenkbar ist.

14. Einrichtung nach einem der Ansprüche 1 bis 13, **dadurch gekennzeichnet, dass** das Lichtablenkelement (4) ein, vorzugsweise keilförmiges, Prisma aufweist.

15. Einrichtung nach Anspruch 14, **dadurch gekennzeichnet, dass** zumindest zwei der Keilflächen des keilförmigen Prismas einen Winkel von maximal 10°, vorzugsweise von maximal 5°, miteinander einschließen.

16. Einrichtung nach einem der Ansprüche 1 bis 15, **dadurch gekennzeichnet, dass** Laserlichteintrittsflächen (8) der Austrittslichtwellenleiter (2) paarweise aneinander angrenzend auf einer geschlossenen Linie, vorzugsweise auf einem Kreis (14), angeordnet sind.

17. Einrichtung nach einem der Ansprüche 1 bis 16, **dadurch gekennzeichnet, dass** Laserlichteintrittsflächen (8) der Austrittslichtwellenleiter (2) rotationssymmetrisch angeordnet sind.

18. Einrichtung nach einem der Ansprüche 1 bis 17, **dadurch gekennzeichnet, dass** die Austrittslichtwellenleiter (2) zumindest bereichsweise um ein gemeinsames Zentrum (9) gewunden sind.

19. Einrichtung nach einem der Ansprüche 13 bis 18, **dadurch gekennzeichnet, dass** das Lichtablenkelement (4) das transmittierte Laserlicht, vorzugsweise dessen Fokus, um einen Winkel zwischen 0,5° und 5°, vorzugsweise um einen Winkel zwischen 1° und 2°, ablenkt.

20. Einrichtung nach einem der Ansprüche 1 bis 12, **dadurch gekennzeichnet, dass** das Lichtablenkelement (4) so ausgebildet ist, dass das Laserlicht, vorzugsweise dessen Fokus, durch Reflektion am Lichtablenkelement (4) in seiner Ausbreitungsrichtung ablenkbar ist.

21. Einrichtung nach Anspruch 20, **dadurch gekennzeichnet, dass** das Lichtablenkelement (4) im Wesentlichen ringförmig und/oder scheibenförmig ausgebildet ist, und an seiner Innenfläche bzw. Oberfläche eine Reflektionsoberfläche (10) aufweist.

22. Einrichtung nach Anspruch 21, **dadurch gekennzeichnet, dass** die Reflektionsoberfläche (10) sich in zumindest einer Raumrichtung über einen Winkelbereich von 360° erstreckt.

23. Einrichtung nach Anspruch 21 oder 22, **dadurch gekennzeichnet, dass** die Reflektionsoberfläche (10) eine Abfolge von gegeneinander verkippten, vorzugsweise unmittelbar aneinander angrenzenden, gekrümmten Oberflächensegmenten, vorzugsweise Kugeloberflächensegmenten (11), aufweist.

24. Einrichtung nach Anspruch 23, **dadurch gekennzeichnet, dass** zumindest zwei, vorzugsweise alle, Kugeloberflächensegmente (11) denselben Kugelradius aufweisen.

25. Einrichtung nach Anspruch 23 oder 24, **dadurch gekennzeichnet, dass** die Mittelpunkte von jeweils zwei benachbarten Kugeloberflächensegmenten (11) in Richtung einer Rotationsachse (12) des ringförmigen Lichtablenkelementes (4) gegeneinander versetzt sind.

26. Einrichtung nach einem der Ansprüche 23 bis 25, **dadurch gekennzeichnet, dass** die Mittelpunkte von zumindest zwei, vorzugsweise von allen, Kugeloberflächensegmenten (11) auf einer Rotationsachse (12) des ringförmigen Lichtablenkelementes (4) liegen.

27. Einrichtung nach einem der Ansprüche 20 bis 26, **dadurch gekennzeichnet, dass** der Betrag des Winkels zwischen einem aus der Lichtquelle (3) und/oder dem Eintrittslichtwellenleiter (1) austretenden Laserlichtstrahl und dem am Lichtablenkelement (4) reflektierten Laserlichtstrahl höchstens 45°, vorzugsweise höchstens 20°, beträgt.

28. Einrichtung nach einem der Ansprüche 20 bis 27, **dadurch gekennzeichnet, dass** an einer Laserlichtaustrittsfläche (13) des Eintrittslichtwellenleiters (1) und/oder der Lichtquelle (3) eine Kollimatoroptik angeordnet ist.

29. Einrichtung nach einem der Ansprüche 20 bis 28, **dadurch gekennzeichnet, dass** eine Laserlichtaustrittsfläche (13) der Lichtquelle (3) und/oder des Eintrittslichtwellenleiters (1) und die Laserlichteintrittsflächen (8) der Austrittslichtwellenleiter (2), vorzugsweise ortsfest, mittig innerhalb des ringförmig und/oder scheibenförmig ausgebildeten Lichtablenkelementes (4) angeordnet sind.

30. Einrichtung nach einem der Ansprüche 1 bis 29, **dadurch gekennzeichnet, dass** das Lichtablenkelement (4) das Laserlicht aus mindestens zwei, vorzugsweise mehreren, Lichtquellen (3) und/oder Eintrittslichtwellenleitern (1) in Richtung von jeweils mindestens zwei, vorzugsweise mehreren, Austrittslichtwellenleitern ablenkt.

31. Laserzündvorrichtung für eine Brennkraftmaschine, insbesondere Gasmotor, mit einer Einrichtung nach einem der Ansprüche 1 bis 30.

32. Brennkraftmaschine , insbesondere Gasmotor, mit einer Einrichtung nach einem der Ansprüche 1 bis 30.
